# EUROPEAN PATENT APPLICATION

(11) **EP 2 253 871 A1**
(43) Date of publication of application: **24.11.2010**
(21) Application number: 10153283.6
(22) Date of filing: 11.02.2010
(51) Int. Cl.: F16K 1/30, B65D 83/14

(54) **Valve for non-refillable container of pressurized fluid**

(30) Priority: 19.05.2009 IT MI20090872
(71) Applicant: Bridgeport S.R.L., 24060 Bolgare (BG) (IT)
(72) Inventor: Leo, Leonardo Claudio, 25066, LUMEZZANE (BRESCIA) (IT)
(74) Representative: Petruzziello, Aldo

(57) **Abstract**

There is described a valve (10) for a non-refillable container of pressured fluid comprising a valve body (12) suitable for defining a valve chamber (14) and valve opening and closing means (20) movable inside said valve chamber (14) between an opening position, wherein the fluid can pass through the valve, and a closing position, wherein the fluid does not pass through the valve, The valve (10) further comprises a blocking member (30) removably connected to the opening and closing means (20) and movable between a first position, wherein it is constrained to the opening and closing means (20) and permits a first filling of the container and a second position, wherein it is detached from the opening and closing means (20) and obstructs the passage of fluid through the valve, preventing further filling of the container. A shoulder is formed in the valve body, suitable for mechanically retaining the blocking member, upon releasing the fluid loading pressure, thereby causing the separation from the opening and closing means.

## Description

The present invention refers in general to a valve for a container of pressured fluid, for example a container for pressured gas. More in particular, the invention refers to a valve for a non-refillable container of pressured fluid.

What is meant by a non-refillable container of pressured fluid is any container which for safety or other reasons cannot be re-used once it has been emptied of its original contents.

Non-refillable containers of pressured fluid are usually filled under carefully controlled conditions at a filling site and subsequently transferred from the filling site to the place of use. Once emptied of their contents, the containers must be taken back to the filling site for re-use, if foreseen, or must be destroyed in the case of non-reusable containers.

Unfortunately, mainly for cost saving reasons, the practice of re-filling containers in their place of use, instead of at the filling site, and therefore by personnel not qualified for this task, is becoming increasingly widespread. This practice is particularly dangerous when filling takes place at excessively high pressures or when the container is filled with a fluid other that the original one and not compatible with the container. The possible consequences of this are: introduction of impurities into the container, poor functioning thereof and, in the worst cases, explosion of the container.

It is therefore obvious that re-use of a non-refillable container for pressured fluid is absolutely to be avoided, in the first place for reasons related to safety.

So-called non-reusable or non-refillable valves for use with non-refillable containers of pressured liquid are known to the art. What is meant by a non-reusable or non-refillable valve is any valve that allows an initial filling of the container to which it is connected with the desired fluid, for example a pressured gas, and subsequent removal of the fluid from the container, at the same time preventing the container from later being refilled with the same fluid or with a different fluid.

Such non-refillable valves of the prior art typically comprises a ball which is forced to pass through a narrowing, consisting, for example, of a series of pawls or elastic arms, so as to reach a final position. Having reached this position, the ball can no longer return to the starting position.

However, the above described non-refillable valves of the prior art present some drawbacks. In the first place, because of the high pressures involved, it can happen that one or more of the pawls or arms breaks during operation of the valve. This leads to poor operation of said valve.

Furthermore, non-refillable valves of the prior art are complex and expensive to produce.

US 4 543 980 discloses a valve for a pressurized container having a blocking element therein which is adapted to move from an initial location in which fluid can move in and out of the container past the blocking element to a position in which the valve permits escape of fluid under pressure exerted from the inside of the container, but which automatically closes in response to exposure to an external pressure greater than the pressure inside the container. The blocking element is formed of at least one flexible, radially extending arm whose lateral radius is reduced upon movement of the blocking element from the initial location to the final location. The at least one arm expands within the final location to prevent return of the blocking element to the initial location.

GB 2 329 703 discloses a non-refillable valve comprising a valve body with a main valve pin operable therein to allow discharge through the valve and a floating valve pin operable therein to allow discharge through the valve but to prevent filling through the valve and comprising a removable retainer, which may be a press-fitted plug in the valve body, operable in relation to the floating valve pin to allow an initial filling through the valve.

The main object of the present invention is to provide a valve for a non-refillable container of pressured fluid that is safe during operation.

Another object of the present invention is to provide a valve for a non-refillable container of pressured fluid that is relatively simply and can be produced at a competitive cost.

According to one aspect of the invention, there is provided a valve for a non-refillable container of pressured fluid comprising a valve body suitable for defining a valve chamber and valve opening and closing means movable inside the valve chamber between an opening position, wherein the fluid can pass through the valve, and a closing position, wherein the fluid does not pass through the valve. The valve is **characterized in that** it comprises a blocking member removably connected to the opening and closing means and movable between a first position, wherein it is constrained to the opening and closing means and permits a first filling of the container, and a second position, wherein it is detached from the opening and closing means and obstructs the passage of fluid through the valve, preventing further filling of the container, a shoulder being formed in the valve body, suitable for mechanically retaining the blocking member, upon releasing the fluid loading pressure, thereby causing the separation from the opening and closing means.

Advantageous aspects of the invention are apparent from the dependent claims.

Further characteristics of the invention will be made clearer by the detailed description that follows, referring to a purely exemplifying and therefore non limiting embodiment thereof, illustrated in the appended drawings, wherein:
Figure 1 is a partially sectional view of a valve of the invention;
Figure 2 is a perspective view of a detail of the valve of Figure 1;
Figure 3 is a front view of the detail of Figure 2;
Figure 4 is a top plan view of the detail of Figure 2; and
Figures 5 to 7 show the valve of Figure 1, in three different operating positions.

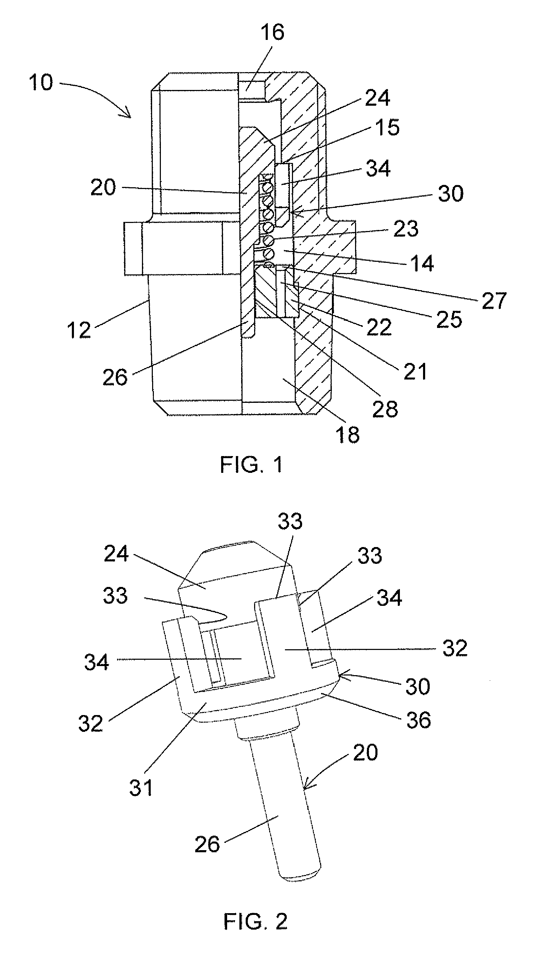

The valve of the invention, indicated as a whole with reference numeral 10 in Figure 1, comprises a valve body 12, which defines a valve chamber 14 provided with an inlet port 16 and an outlet port 18. The outlet port 18 is suitable to be connected to a non-refillable container of pressured fluid, whilst the inlet aperture 16 is suitable to be connected to filling means for the above mentioned container. The non-refillable container for pressured fluid and the means for filling thereof do not form part of the present invention, so they will not be illustrated and described herein.

The valve chamber 14 preferably has an upper portion with a smaller diameter, so that a shoulder 15 is defined in the valve body 12.

Opening and closing means for the valve 10, for example a shutter 20, are movable inside the valve chamber 14. The shutter 20 is coupled to the valve body 12 by means of suitable coupling means 22, preferably cylindrical in shape, blocked in position in an annular cavity 21 formed in the valve body 12, preferably near the outlet port 18 of the valve chamber 14.

In particular, the shutter 20 is mushroom shaped and comprises a head portion 24 and a stem 26. The stem 26 is suitable to slide in a bore 28 provided in the coupling means 22. Furthermore, between the coupling means 22 and the head portion 24 of the shutter 20 there are situated elastic means, for example a spring 23, suitable to abut, in use, between the coupling means 22 and the head portion 24 of the shutter 20. The coupling means 22 thus act as a spring pusher.

Furthermore, there is formed in the coupling means 22 a plurality of through holes 25, suitable, in use, to allow the passage of the fluid introduced into the valve chamber 14 via the inlet port 16, through the valve chamber 14 to the outlet port 18. The through holes 25 preferably open at the top into a countersunk circular channel 27 formed in said coupling means 22, whose function will be made clearer later in the present description.

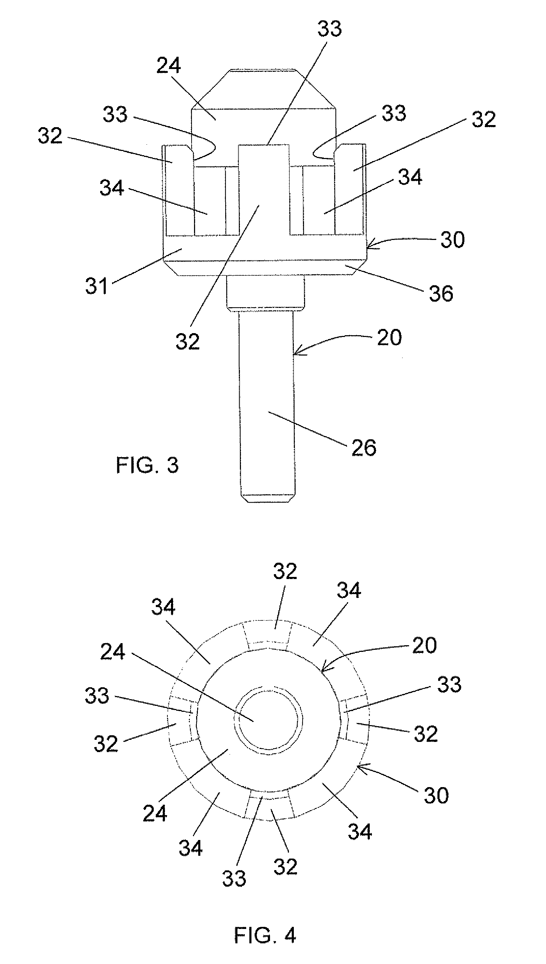

As illustrated in greater detail in Figures 2 to 4, the head portion 24 of the shutter 20 carries a blocking member 30. The blocking member 30 has an edge 31, preferably annular, from which extends a plurality of teeth 32, for example four teeth, preferably circumferentially equidistant along the edge 31. Some or all of the teeth 32 are preferably constrained to the head portion 24 of the shutter 20 by means of respective removable attachment points. In the example illustrated, three removable attachment points 33 are provided at three teeth 32. Furthermore, between one tooth and the next there are apertures 34, suitable to allow the passage of fluid inside the valve chamber 14, as will be described in greater detail further on.

The edge 31 of the blocking member 30 preferably has a countersunk lower portion 36, suitable to cooperate, in use, with the countersunk circular channel 27 of the coupling means 22 between the shutter 20 and the valve body 12.

The shutter 20 and the blocking member 30 are preferably made in a single piece, by moulding of plastic material. Of course, other materials and other production methods can be provided for the shutter and the blocking member.

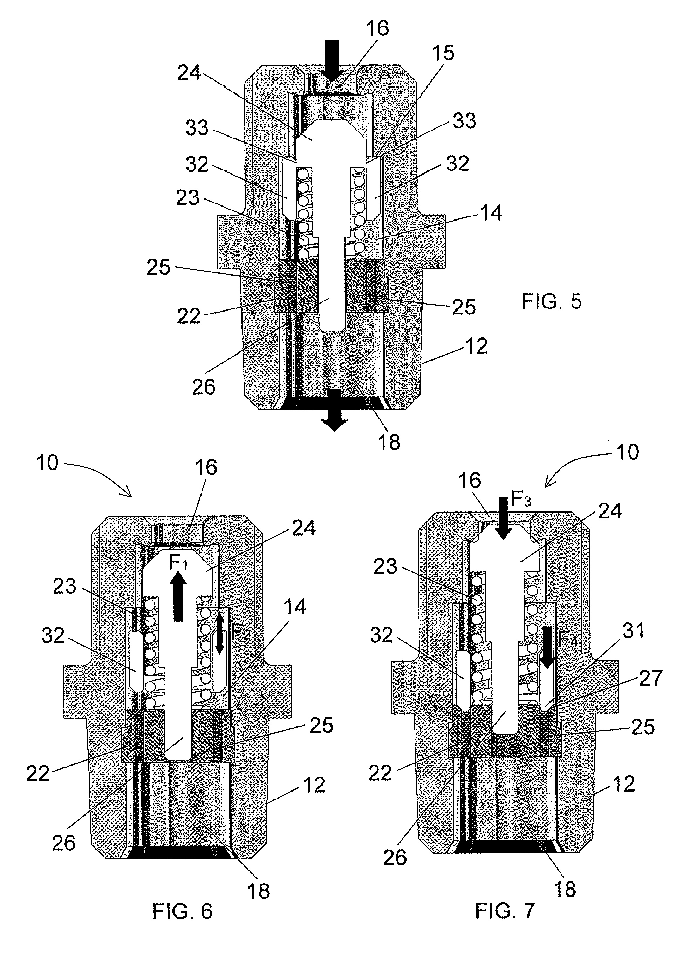

With reference to Figures 5 to 7, operation of the non-refillable valve 10 of the invention will now be described.

First of all, the valve 10 is connected to a non-refillable container suitable to contain a pressured fluid. Typically, the valve 10 is screwed into a suitable seat provided in the container so as to put its outlet port 18 into fluid communication with the inside of the container.

Once the valve 10 has been connected to the container, the first filling and subsequent pressurization of the fluid inside the container is performed through the inlet port 16 of the valve chamber 14. To this end, the inlet port 16 is put into fluid communication with the feeding means of the desired fluid.

The first filling condition of the container is illustrated in detail in Figure 5.

As is known, filling of the container with fluid takes place by maintaining a constant difference between the loading pressure, or pressure outside the container, and the pressure that comes to be created inside the container. In other words, as the pressure inside the container increases, the outside pressure automatically changes so as to keep the above defined pressure difference constant. A typical value for the pressure difference between the inside and the outside of the container is about 30 bar.

As can be observed, in this condition, through the effect of the outside pressure, the shutter 20 is in a retracted position with respect to the inlet port 16 of the valve chamber 14, and the blocking member 30 is constrained removably to the head 24 of the shutter 20 at the three attachment points 33 between the teeth 32 and the head portion 24 of the shutter 20. Furthermore, the spring 23 is compressed between the head portion 24 of the shutter 20 and the coupling means 22 between the shutter 20 and the valve body 12.

Therefore, during the first filling of the container, the fluid delivered by the filling means enters the valve chamber 14 through the inlet port 16, passes through the apertures 34 provided between the teeth 32 of the blocking member 30 and through the through holes 25 formed in the coupling means 22 between the shutter 20 and the valve seat 14, and enters the container through the outlet port 18 of the valve chamber 14.

When the first filling stage has been completed, the fluid feeding means are detached from the valve 10. Consequently, the loading pressure is released, so that the pressure inside the container, no longer being balanced by the outside pressure, acts entirely on the shutter 20 and on the blocking member 30 constrained thereto. The elastic force exerted by the spring 23 also acts on the shutter 20.

As better illustrated in Figure 6, through the effect of the force inside the container and the elastic force of the spring 23, the shutter 20 is pushed upwards (arrow F1), whilst the blocking member 30 is mechanically retained by the shoulder 15 formed in the valve body 12. As a result the attachment points 33 between the teeth 32 of the blocking member 30 and the head portion 24 of the shutter 20 are broken, with a consequent separation between the shutter 20 and the blocking member 30.

The blocking member 30, released from the shutter 20, remains movable inside the valve chamber 14 between the shoulder 15 and the coupling means 22 (arrow F2). In the presence of particular pressure conditions, the countersunk portion 36 of the annular edge 31 of the blocking member 30 can abut, through gravity for example, against the countersunk circular channel 27 of the coupling means 22, obstructing the through holes 25 which open into the channel 27. This condition is illustrated in Figure 7.

During use of the container, as is known, such pressure is exerted on the shutter 20 as to overcome the pressure present inside the container. The shutter 20 is therefore lowered, leaving free the inlet port 16 of the valve chamber 14.

The pressure inside the container acts on the blocking member 30 pushing it upwards, possibly leaving free the through holes 25 of the coupling means. In this manner, the fluid flows out of the container passing through the through holes 25, the apertures 34 of the blocking member 30 and the outlet port 18 of the valve chamber 14.

Once it has been emptied of its original contents, the container cannot be re-used.

Let us suppose, on the other hand, that a user tries to re-use the container, for example by filling it with the same fluid as before or with a different type of fluid. As illustrated in Figure 7, the outside pressure exerted by the incoming fluid overcomes the thrust force of the inside fluid and of the spring, so that the shutter is lowered (arrow F3) freeing the inlet port 16 of the valve chamber 14. This same pressure of incoming fluid pushes the blocking member 30, this time downwards. Said blocking member 30 abuts, if it has not already done so, against the coupling means 22 between the shutter 20 and the valve body 12, thus obstructing the through holes 25 formed in the coupling means 22 (arrow F4).

It follows that the fluid introduced through the inlet port 16 of the valve chamber 14 cannot reach the outlet port 18, making a second filling of the container practically impossible.

From what is described above it can be understood that, thanks to the particular configuration of the blocking member, it is possible to obtain a valve for a non-refillable container of a pressured fluid that operates safely, is relatively simple and can be obtained with competitive production costs.

Numerous modifications and changes of detail within the reach of a person skilled in the art can be made to the present embodiment of the invention without thereby departing from the scope of the invention as set forth in the appended claims.

## Claims

1. A valve (10) for a non-refillable container of a pressured fluid comprising a valve body (12) suitable for defining a valve chamber (14) and opening and closing means (20) of said valve (10) movable inside said valve chamber (14) between an opening position, wherein the fluid can pass through the valve, and a closing position, wherein the fluid does not pass through the valve,
**characterized in that** it comprises a blocking member (30) removably connected to the opening and closing means (20) and movable between a first position, wherein it is constrained to the opening and closing means (20) and permits a first loading of the container, and a second position, wherein it is detached from the opening and closing means (20) and obstructs the fluid passage through the valve (10), thereby preventing a further loading of the container, a shoulder (15) being formed in said valve body (12) suitable for mechanically retaining said blocking member (30), upon releasing the fluid loading pressure, thereby causing the separation from said opening and closing means (20).

2. A valve (10) according to claim 1, **characterized in that** said opening and closing means (20) are coupled to said valve body (12) through coupling means (22) including a bore (28) and a plurality of through holes (25) suitable for permitting the fluid to pass through the valve (10).

3. A valve (10) according to claim 2, **characterized in that** said through holes (25) open upward into a countersunk circular channel (27) formed in said coupling means (22).

4. A valve (10) according to claim 2 or 3, **characterized in that** said opening and closing means comprise a mushroom-shaped shutter (20) comprising a head portion (24) and a stem (26) movable in said bore (28).

5. A valve (10) according to any one of the preceding claims, **characterized in that** said blocking member (30) comprises an edge (31), with a plurality of teeth (32) extending therefrom.

6. A valve (10) according to claim 5, **characterized in that** said plurality of teeth (32) are circumferentially equispaced along said edge (31) and define openings (34) therebetween suitable for permitting the fluid to pass through the valve (10).

7. A valve (10) according to claim 5 or 6, **characterized in that** said blocking member (30) is removably connected to the head portion (24) of the shutter (20) at at least one attachment point (33) provided at at least one tooth (32) of said plurality of teeth (32).

8. A valve (10) according to any one of claims 5 to 7, **characterized in that** said edge (31) has a countersunk lower portion (36) suitable for abutting against the countersunk circular channel (27) formed in said coupling means (22), when the blocking member (30) is detached from the shutter (20).

9. A valve (10) according to any one of the preceding claims, **characterized in that** said opening and closing means (20) and said blocking member (30) are integrally formed by moulding a plastic material.
